# EUROPÄISCHE PATENTSCHRIFT

(11) **EP 1 237 943 B1**
(45) Veröffentlichungstag und Bekanntmachung des Hinweises auf die Patenterteilung: **25.08.2004**
(21) Anmeldenummer: 00987264.9
(22) Anmeldetag: 17.11.2000
(51) Int. Cl.: C08F 4/658, C08F 10/00

(54) **VERFAHREN ZUM HERSTELLEN EINES POLY-1-OLEFINS IN GEGENWART EINES ZIEGLER KATALYSATORS**
METHOD FOR PRODUCING A POLY-1-OLEFIN IN THE PRESENCE OF A ZIEGLER CATALYST
PROCEDE DE FABRICATION D'UNE POLY-1-OLEFINE EN PRESENCE D'UN CATALYSEUR DE ZIEGLER

(30) Priorität: 26.11.1999 DE 19956915; 28.01.2000 DE 10003872
(43) Veröffentlichungstag der Anmeldung: 11.09.2002
(73) Patentinhaber: Basell Polyolefine GmbH, 50389 Wesseling (DE)
(72) Erfinder: ALT, Frank, 65929 Frankfurt/Main (DE); SCHÖNEBORN, Paul, 65830 Kriftel (DE); BÖHM, Ludwig, 65795 Hattersheim (DE)
(86) Internationale Anmeldenummer: PCT/EP2000/011436
(87) Internationale Veröffentlichungsnummer: WO 2001/038405

(56) Entgegenhaltungen:
- EP-A- 0 607 773
- DE-A- 4 017 661

## Beschreibung

Die Erfindung bezieht sich auf ein Verfahren zum Herstellen eines Poly-1-olefins in Gegenwart eines Ziegler Katalysators hergestellt aus einer gelartigen Magnesiumalkoholat-Dispersion.

Aus Magnesiumalkoholaten Mg(OR¹)(OR²) oder "komplexen" Magnesiumalkoholaten lassen sich durch Umsetzung mit Verbindungen des Titans, Zirkons, Vanadiums oder Chroms Feststoffe herstellen, die zusammen mit metallorganischen Verbindungen der 1., 2. oder 13. Gruppe des Periodensystems (die Gruppen werden wie beispielsweise im Handbook of Chemistry and Physics, 76^{th} edition (1995-1996) abgedruckt zitiert) hervorragende Katalysatoren für die Olefinpolymerisation ergeben.

Bekannt ist ein Verfahren zur Polymerisation von 1-Olefinen in Gegenwart eines Mischkatalysators, dessen Komponente a durch Umsetzung von Magnesiumalkoholaten mit vierwertigen, halogenhaltigen Titanverbindungen hergestellt wurde (vgl. US-A 3,644,318). Die Magnesiumalkoholate werden in der Form eingesetzt, wie sie im Handel erhältlich sind. Die in diesem Verfahren erhältlichen Polymeren besitzen eine enge Molmassenverteilung.

Weiterhin ist ein Verfahren zur Herstellung eines Ziegler Katalysators bekannt, bei welchem ein gelöstes Magnesiumalkoholat mit einer halogenhaltigen Ti- oder V-Verbindung und einem Übergangsmetallalkoholat umgesetzt wird (vgl. EP-A-0 319 173). Die dabei entstehenden Katalysatorpartikeln sind kugelförmig und besitzen eine mittlere Teilchengröße von 10 bis 70 µm.

Schließlich ist bekannt, als Übergangsmetallkomponente ein Produkt der Reaktion einer vierwertigen, halogenhaltigen Titanverbindung mit einem Magnesiumalkoholat, welches mindestens 40 Gew.-% Teilchen eines Durchmessers kleiner 63 µm enthält, zu verwenden (vgl. EP-A-0 223 011). Ein Magnesiumalkoholat mit dieser Korngröße erhält man unter anderem durch Mahlen eines Handelsproduktes in einer Kugelmühle. Das Magnesiumalkoholat wird als Suspension in einem inerten Kohlenwasserstoff eingesetzt.

Es wurde auch in der EP-A-0 532 551 beschrieben, dass man Ziegler Katalysatoren mit hoher bis sehr hoher Aktivität und mit der Möglichkeit, die Teilchengrößenverteilung des Polymerisats zu steuern, erhält, wenn man das Magnesiumalkoholat als gelartige Dispersion einsetzt. Diese gelartige Dispersion wird erhalten, indem das handelsübliche Magnesiumalkoholat in einem inerten Kohlenwasserstoff suspendiert wird und diese Suspension unter Schutzgas (Ar, N₂) in einer Dispergiereinheit mit einem Hochleistungsscherwerkzeug (z.B. ®Ultra-Turrax oder ®Dispax, IKA-Maschinenbau Janke & Kunkel GmbH) über einen Zeitraum von mehreren Stunden oder Tagen unter starker Kühlung dispergiert wird.

Indessen befriedigen die bekannten Katalysatoren insofern noch nicht, als die Energie für die Herstellung der gelartigen Magnesiumalkoholatdispersion unbefriedigend hoch ist und durch geeignete Maßnahmen reduziert werden sollte.

Aufgabe der vorliegenden Erfindung war es daher, ein Verfahren zum Herstellen von Polyolefinen in Gegenwart eines Ziegler Katalysators zu finden, dessen eine Komponente das Reaktionsprodukt einer gelartigen Magnesiumalkoholatdispersion mit einer Übergangsmetallverbindung darstellt, wobei die Magnesiumalkoholatdispersion auf einfachere und wirtschaftlichere Weise hergestellt werden soll und wobei das mit dem Katalysator hergestellte Polymerisat eine engere Korngrößenverteilung als nach dem Stand der Technik aufweisen soll.

Gelöst wird diese Aufgabe durch ein Verfahren zum Herstellen eines Poly-1-olefins durch Polymerisation eines 1-Olefins der Formel R⁴CH=CH₂, in der R⁴ Wasserstoff oder einen Alkylrest mit 1 bis 10 Kohlenstoffatomen bedeutet, in Suspension, in Lösung oder in der Gasphase, bei einer Temperatur im Bereich von 20 bis 200 °C und einem Druck im Bereich von 0,5 bis 50 bar, in Gegenwart eines Katalysators, der aus dem Umsetzungsprodukt eines Magnesiumalkoholats mit einer Übergangsmetallverbindung (Komponente a) und einer metallorganischen Verbindung (Komponente b) besteht, dessen Komponente a in der Weise hergestellt wurde, dass eine Übergangsmetallverbindung des Titans, des Zirkons, des Vanadiums oder des Chroms mit einer gelartigen Dispersion des Magnesiumalkoholats in einem inerten Kohlenwasserstoff umgesetzt wurde, dessen Kennzeichenmerkmal darin zu sehen ist, dass die gelartige Dispersion des Magnesiumalkoholats durch Rühren mit einem Rührorgan oder Zerscheren mit einem Hochleistungsscherwerkzeug einer Suspension eines nach Trockenmahlung von handelsüblichem Magnesiumalkoholatpulver mit einer mittleren Teilchengröße, ausgedrückt als d₅₀-Wert, von größer/gleich 15 µm, vorzugsweise im Bereich von 100 bis 1000 µm, in einer inertisierten Mühle erhaltenen Magnesiumalkoholatpulvers mit einer mittleren Teilchengröße, ausgedrückt als d₅₀-Wert, von kleiner als 15 µm in einem inerten Kohlenwasserstoff, in dem das Magnesiumalkoholat nicht löslich ist, erhalten wird.

Die erfindungsgemäß durch Rühren mit einem Rührorgan oder Zerscheren mit einem Hochleistungsscherwerkzeug einer Suspension des gemahlenen Magnesiumalkoholatpulvers in einem inerten Kohlenwasserstoff, in dem das Magnesiumalkoholat nicht löslich ist, hergestellte gelartige Dispersion des Magnesiumalkoholats weist bei gleichem Verhältnis von vorgelegtem Feststoffanteil zu Kohlenwasserstoffanteil, ausgedrückt als Massenprozent, bei gleicher Temperatur ein langsameres Absitzen des Feststoffanteils und einen höheren Raumanteil des Feststoffanteils in der Dispersion nach vollständigem Absitzen des Feststoffanteils, ausgedrückt als Volumenprozent, auf als die eingesetzte Suspension des gemahlenen Magnesiumalkoholatpulvers in dem gleichen inerten Kohlenwasserstoff als solche.

Eine gelartige Dispersion der erfindungsgemäßen Art wird durch Rühren mit einem Rührorgan oder Zerscheren mit einem Hochleistungsscherwerkzeug einer Suspension des gemahlenen Magnesiumalkoholatpulvers in einem inerten Kohlenwasserstoff, in dem das Magnesiumalkoholat nicht löslich ist, in einem inertisierten Gefäß hergestellt, wobei in jedem Volumeninkrement der Mischung die gleiche mittlere Anzahl an Teilchen vorliegt. Das Rühren mit einem Rührorgan oder Zerscheren mit einem Hochleistungsscherwerkzeug erfolgt erfindungsgemäß bevorzugt bei einer Temperatur im Bereich von 10 bis 150 °C, vorzugsweise von 20 bis 100 °C, über eine Zeitdauer im Bereich von 1 bis 24 h, vorzugsweise von 2 bis 20 h, in einem inerten Kohlenwasserstoff, in dem die Magnesiumalkoholatteilchen nicht löslich sind.

Die Erfindung betrifft weiterhin den in diesem Verfahren eingesetzten Katalysator als solchen.

Zum Herstellen der Komponente a wird ein im Handel erhältliches Magnesiumalkoholat verwendet. Dieses Magnesiumalkoholat kann ein "einfaches" Magnesiumalkoholat der Formel Mg(OR¹)(OR²) sein, in der R¹ und R² gleich oder verschieden sind und einen Alkylrest mit 1 bis 6 Kohlenstoffatomen bedeuten. Beispiele sind Mg(OC₂H₅)₂, Mg(OiC₃H₇)₂, Mg(OnC₄H₉)₂, Mg(OCH₃)(OC₂H₅), Mg(OC₂H₅)(OnC₃H₇). Es kann auch ein "einfaches" Magnesiumalkoholat der Formel Mg(OR)ₙXₘ verwendet werden, in der X = Halogen, (SO₄)_{1/2}, OH, (CO₃)_{1/2}, (PO₄)_{1/3}, Cl ist, R die oben genannte Bedeutung von R¹ oder R² hat und n + m = 2 ist.

Es kann jedoch auch ein "komplexes" Magnesiumalkoholat eingesetzt werden.
Als "komplexes" Magnesiumalkoholat wird ein Magnesiumalkoholat bezeichnet, das neben Magnesium mindestens ein Metall der 1., 2., 13. oder 14. Gruppe des Periodensystems enthält. Beispiele für ein derartiges komplexes Magnesiumalkoholat sind:

[Mg(OiC₃H₇)₄]Li₂; [Al₂(OiC₃H₇)₈]Mg; [Si(OC₂H₅)₆]Mg; [Mg(OC₂H₅)₃]Na; [Al₂(OiC₄H₉)₈]Mg; [Al₂(O-secC₄H₉)₆(OC₂H₅)₂]Mg.

Die Herstellung der komplexen Magnesiumalkoholate (Alkoxosalze) erfolgt nach bekannten Methoden.

Bevorzugt verwendet werden die einfachen Magnesiumalkoholate, insbesondere Mg(OC₂H₅)₂, Mg(OnC₃H₇)₂oder Mg(OiC₃H₇)₂. Das Magnesiumalkoholat wird in reiner Form eingesetzt.

Handelsübliches Mg(OC₂H₅)₂ hat im allgemeinen folgende Spezifikation:

| | |
|---|---|
| Mg-Gehalt | 21 - 22 Gew.-% |
| MgCO₃ | ≤ 1 Gew.-% |
| C₂H₅OH-Gehalt | < 0,3 Gew.-% |

Der mittlere Korndurchmesser liegt bei 400 µm, wobei mindestens 90% der Partikel einen Korndurchmesser im Bereich von 200 bis 1200 µm besitzen.

Das handelsübliche Magnesiumalkoholat mit einem mittleren Komdurchmesser von etwa 400 µm wird erfindungsgemäß in einer inertisierten Mühle in trockenem Zustand so lange gemahlen, bis das Mahlgut einen mittleren Komdurchmesser, ausgedrückt als d₅₀-Wert, von kleiner als 15 µm aufweist.

Eine Mühle gilt als im Sinne der Erfindung inertisiert, wenn der Anteil der Gase aus der atmosphärischen Umgebung im gesamten Raum der Mahlapparatur, der während des Mahlvorganges mit dem Magnesiumalkoholat in Berührung kommt, durch Verdrängung mit inerten Gasen auf weniger als 1 Vol.-% erniedrigt wurde. Als inerte Gase gelten im Rahmen der vorliegenden Erfindung insbesondere Stickstoff und Argon.

Im Rahmen der vorliegenden Erfindung besonders geeignete Mühlen sind beispielsweise Kugelmühlen, Prallmühlen, Gegenstrahlmühlen, Spiralstrahimühlen oder Sichtermühlen. Besonders geeignet ist eine Gegenstrahlmühle, wie sie in dem Firmenprospekt "Mechanische Verfahrenstechnik, Trocken- und Nassprozesse" Nr. 017/10 297.2d der Firma Hosakawa Alpine AG, Augsburg/Deutschland, beschrieben ist und von dieser Firma auch bezogen werden kann.

Als inerte Kohlenwasserstoffe eignen sich erfindungsgemäß aliphatische oder cycloaliphatische Kohlenwasserstoffe wie Butan, Pentan, Hexan, Heptan, Isooktan, Cyclohexan, Methylcyclohexan, sowie aromatische Kohlenwasserstoffe wie Toluol, Xylol; auch hydrierte Dieselöl- oder Benzinfraktionen, die sorgfältig von Sauerstoff, Schwefelverbindungen und Feuchtigkeit befreit worden sind, sind brauchbar.

Die gelartige Dispersion wird dann in einer Stufe oder in mehreren Stufen mit einer Ti-Verbindung (TiCl₄, Ti(OR)₄ u.a.), einer Zr-Verbindung (Zr(OR)₄ u.a.), einer V-Verbindung (VCl₄, VOCl₃ u.a.) oder einer Chromverbindung (CrO₂Cl₂ u.a.) umgesetzt.

Dabei wird die gelartige Magnesiumalkoholatdispersion mit der Übergangsmetallverbindung bei einer Temperatur im Bereich von 20 bis 100 °C, vorzugsweise von 60 bis 90 °C, in Gegenwart eines inerten Kohlenwasserstoffs unter Rühren mit einer den Erfordernissen entsprechenden Rührerdrehzahl umgesetzt. Auf 1 mol Magnesiumalkoholat werden 0,05 bis 5 mol Übergangsmetallverbindung eingesetzt, vorzugsweise 0,1 bis 3,5 mol. Die Reaktionsdauer beträgt 0,5 bis 8 Stunden, vorzugsweise 2 bis 6 Stunden.

Man erhält einen in Kohlenwasserstoff unlöslichen, magnesium- und übergangsmetallhaltigen Feststoff, der im Rahmen der Erfindung als Komponente a bezeichnet wird. Die Komponente a bildet mit dem Kohlenwasserstoff eine Suspension (Feststoff/ Flüssigkeit).

Die Herstellung des erfindungsgemäß zu verwendenden Polymerisationskatalysators erfolgt durch Zusammenbringen der Komponente a und einer metallorganischen Verbindung eines Metalls der 1., 2. oder 13. Gruppe des Periodensystems (Komponente b). Die Komponente a kann als Suspension direkt mit der Komponente b umgesetzt werden; sie kann jedoch auch zunächst als Feststoff isoliert, gelagert und zur späteren Weiterverwendung wieder suspendiert werden.

Vorzugsweise verwendet man als Komponente b aluminiumorganische Verbindungen.

Als aluminiumorganische Verbindungen eignen sich chlorhaltige aluminiumorganische Verbindungen, die Dialkylaluminiummonochloride der Formel R³₂AlCl oder Alkylaluminiumsesquichloride der Formel R³₃Al₂Cl₃, worin R³ ein Alkylrest mit 1 bis 16 Kohlenstoffatomen ist. Als Beispiele seien genannt (C₂H₅)₂AlCl, (iC₄H₉)₂AlCl, (C₂H₅)₃Al₂Cl₃. Es können auch Gemische dieser Verbindungen eingesetzt werden.

Andererseits eignen sich auch chlorfreie aluminiumorganische Verbindungen wie Aluminiumtrialkyle AIR³₃ oder Aluminiumdialkylhydride der Formel AIR³₂H, in denen R³ ein Alkylrest mit 1 bis 16 Kohlenstoffatomen bedeutet. Beispiele sind Al(C₂H₅)₃, Al(C₂H₅)₂H, Al(C₃H₇)₃, Al(C₃H₇)₂H, Al(iC₄H₉)₃, Al(iC₄H₉)₂H, Al(C₈H₁₇)₃, Al(C₁₂H₂₅)₃, Al(C₂H₅)(C₁₂H₂₅)₂, Al(iC₄H₉)(C₁₂H₂₅)₂.

Es können auch Mischungen von metallorganischen Verbindungen von Metallen der 1., 2. oder 13. Gruppe des Periodensystems, insbesondere Mischungen verschiedener aluminiumorganischer Verbindungen eingesetzt werden.

### Beispielsweise seien folgende Mischungen genannt:

Al(C₂H₅)₃ und Al(iC₄H₉) ₃, Al(C₂H₅)₂Cl und Al(C₈H₁₇)₃, Al(C₂H₅)₃ und Al(C₈H₁₇)₃, Al(C₄H₉)₂H und Al(C₈H₁₇)₃, Al(iC₄H₉)₃ und Al(C₈H₁₇)₃, Al(C₂H₅)₃ und Al(C₁₂H₂₅)₃, Al(iC₄H₅)₃ und Al(C₁₂H₂₅)₃, Al(C₂H₅)₃ und Al(C₁₆H₃₃)₃, Al(C₃H₇)₃ und Al(C₁₈H₃₇)₂(iC₄H₉), Al(C₂H₅)₃ und Aluminiumisoprenyl (= Umsetzungsprodukt von Isopren mit Al(iC₄H₉)₃ oder Al(iC₄H₉)₂H).

Das Mischen der Komponente a und der Komponente b kann vor der Polymerisation in einem Rührkessel bei einer Temperatur im Bereich von -30 bis 150 °C, vorzugsweise von -10 bis 120 °C, erfolgen. Es ist auch möglich, die beiden Komponenten direkt im Polymerisationskessel bei einer Temperatur im Bereich von 20 bis 200 °C zu vereinigen. Die Zugabe der Komponente b kann jedoch auch in zwei Schritten erfolgen, indem vor der Polymerisationsreaktion die Komponente a mit einem ersten Teil der Komponente b bei einer Temperatur im Bereich von -30 bis 150 °C voraktiviert wird und die weitere Zugabe eines weiteren Teils der gleichen oder einer anderen Komponente b in dem Polymerisationsreaktor bei einer Temperatur im Bereich von 20 bis 200 °C erfolgt.

Der erfindungsgemäß zu verwendende Polymerisationskatalysator wird zur Polymerisation von 1-Olefinen der Formel R⁴-CH=CH₂, in der R⁴ ein Wasserstoffatom oder einen Alkylrest mit 1 bis 10 C-Atomen bedeutet, eingesetzt, beispielsweise Ethylen, Propylen, Buten-(1), Hexen-(1), 4-Methylpenten-(1) oder Okten-(1).

Vorzugsweise wird Ethylen allein oder im Gemisch von mindestens 50 Gew.-% Ethylen und maximal 50 Gew.-% eines anderen 1-Olefins der obigen Formel polymerisiert. insbesondere wird Ethylen allein oder ein Gemisch von mindestens 90 Gew.-% Ethylen und maximal 10 Gew.-% eines anderen 1-Olefins der obigen Formel polymerisiert.

Die Polymerisation wird in bekannter Weise in Lösung, in Suspension oder in der Gasphase, kontinuierlich oder diskontinuierlich, ein- oder mehrstufig bei einer Temperatur im Bereich von 20 bis 200 °C, vorzugsweise 50 bis 150 °C, durchgeführt. Der Druck beträgt 0,5 bis 50 bar. Bevorzugt ist die Polymerisation in dem technisch besonders interessanten Druckbereich von 1,5 bis 30 bar.

Dabei wird die Komponente a oder das Umsetzungsprodukt der Komponente a mit der Komponente b in einer Konzentration, bezogen auf Übergangsmetall, von 0,0001 bis 1 mmol, vorzugsweise 0,001 bis 0,5 mmol Übergangsmetall pro dm³ Dispergiermittel verwendet. Prinzipiell sind aber auch höhere Konzentrationen möglich.

Die Suspensionspolymerisation wird in einem für das Ziegler-Niederdruckverfahren gebräuchlichen inerten Dispergiermittel durchgeführt, beispielsweise in einem aliphatischen oder cycloaliphatischen Kohlenwasserstoff; als solcher sei beispielsweise Butan, Pentan, Hexan, Heptan, Isooktan, Cyclohexan, Methylcyclohexan genannt. Weiterhin können Benzin- bzw. hydrierte Dieselölfraktionen, die sorgfältig von Sauerstoff, Schwefelverbindungen und Feuchtigkeit befreit worden sind, benutzt werden.

Suspensionspolymerisation wie Gasphasenpolymerisation können direkt oder nach Vorpolymerisation des Katalysators durchgeführt werden, wobei die Vorpolymerisation zweckmäßiger Weise nach dem Suspensionsverfahren durchgeführt wird.

Die Molmasse des Polymerisats wird in bekannter Weise geregelt, vorzugsweise wird zu diesem Zweck Wasserstoff verwendet.

Das erfindungsgemäße Verfahren ergibt in Folge der hohen Aktivität des verwendeten Katalysators Polymerisate mit sehr geringem Übergangsmetall- und Halogengehalt und daher äußerst guten Werten im Farbbeständigkeits- und Korrosionstest.

Ferner ermöglicht das erfindungsgemäße Verfahren, die Katalysatoren so herzustellen, dass damit ihre Korngrößenverteilung und in gewissem Umfang auch die Kornform des entstehenden Polymerpulvers und überraschend auch die Wasserstoffansprechbarkeit des Katalysators optimal eingestellt werden können.

Man erhält erfindungsgemäß eine verbesserte Kommorphologie, vor allem eine überraschend enge Korngrößenverteilung ausgedrückt als S-Wert gemäß DIN 66 144, keine Grob- und Feinanteile und hohe Katalysatorproduktivitäten. Die Schüttdichten sind vergleichbar mit denjenigen nach dem Stand der Technik.

Somit können beim Einsatz der erfindungsgemäßen durch Trockenmahlung und anschließendes Rühren mit einem Rührorgan oder Zerscheren mit einem Hochleistungsscherwerkzeug einer Suspension des gemahlenen Magnesiumalkoholats in einem inerten Kohlenwasserstoff, in dem die Magnesiumalkoholatteilchen nicht löslich sind, hergestellten gelartigen Dispersionen der Magnesiumalkoholate die morphologischen Eigenschaften des Polymerpulvers beeinflusst werden, was für ein technisches Verfahren wertvolle Vorteile bringt (der Transport des Polymerpulvers in der Anlage ist einfacher, die Rieselfähigkeit ist besser). Die hohe Katalysatorproduktivität ergibt geringere Katalysatorrestgehalte im Produkt.

Ferner ist zum Herstellen der gelartigen Magnesiumalkoholatdispersion eine geringere Energie notwendig.

Im Rahmen der nachfolgend beschriebenen Ausführungsbeispiele, mit denen die Erfindung für den Fachmann noch deutlicher erläutert werden soll, wurden die Verhältnisse Mg:Ti:Cl zur Charakterisierung der Katalysatoren nach üblichen analytischen Verfahren bestimmt. Die Pulverkomgrößen und -komgrößenverteilungen wurden durch Siebanalyse gemäß DIN 66 144 bestimmt.

### Beispiel 1 (erfindungsgemäß)

Herstellung der Katalysatorkomponente a unter Verwendung einer gelartigen Mg(OC₂H₅)₂-Dispersion, die durch Rühren einer Suspension aus gemahlenem Mg(OC₂H₅)₂ in einem inerten Kohlenwasserstoff erhalten wurde.

In einem 2 dm³ Rührgefäß mit Rückflusskühler, 2-flügeligem Blatt-Rührer und Inertgasüberlagerung (Ar) wurde eine Suspension aus 57 g eines in einer Gegenstrahlmühle des Typs 100 AFG der Fa. Hosokawa Alpine AG, Augsburg/Deutschland, mit einem Durchsatz von ca. 6 kg/h auf einen mittleren Korndurchmesser von ca. 5,4 µm gemahlenen handelsüblichen Mg(OC₂H₅)₂ in 1,0 dm³ Dieselöl mit einem Siedebereich von 140 bis 170 °C (hydrierte Benzinfraktion) bei Raumtemperatur für 20 h bei einer Rührerdrehzahl von 100 Upm (Umdrehungen pro Minute) gerührt. Die Absitzzeit der dadurch erhaltenen gelartigen Mg(OC₂H₅)₂-Dispersion bei Raumtemperatur betrug nach Abstellen des Rührers ca. 30 min.

Diese Mg(OC₂H₅)₂-Dispersion wurde bei einer Rührerdrehzahl von 150 Upm auf 85 °C gebracht und während 4 h wurden 0,15 mol TiCl₄ konzentriert zudosiert. Danach wurde die entstandene Suspension 1 h auf 110 °C erhitzt. Damit war die Herstellung der Katalysatorkomponente a abgeschlossen.

Während 2 h wurden dann bei einer Temperatur von 110 °C und einer Rührerdrehzahl von 250 Upm 0,35 mol Al₂(C₂H₅)₃Cl₃ in 200 cm³ Dieselöl (hydrierte Benzinfraktion mit Siedebereich von 140 bis 170 °C) zudosiert. Anschließend wurde die Temperatur weitere 2 h bei 110°C gehalten.

Die Feststoff-Suspension wurde auf Raumtemperatur abgekühlt. Das molare Verhältnis des Feststoffs betrug: Mg:Ti:Cl ≈ 1:0,3:2,4.

### Beispiel 2 (erfindungsgemäß)

Die Herstellung der Katalysatorkomponente a unter Verwendung einer gelartigen Mg(OC₂H₅)₂-Dispersion, die durch Rühren einer Suspension aus gemahlenem Mg(OC₂H₅)₂ in einem inerten-Kohlenwasserstoff erhalten wurde, erfolgte nach dem Verfahren gemäß Beispiel 1 mit dem Unterschied, dass das auf einen mittleren Komdurchmesser von ca. 5,4 µm gemahlene handelsübliche Mg(OC₂H₅)₂ in Dieselöl mit einem Siedebereich von 140 bis 170 °C (hydrierte Benzinfraktion) bei einer Temperatur von 85 °C für 20 h bei einer Rührerdrehzahl von 100 Upm gerührt wurde.

Die Absitzzeit der dadurch erhaltenen gelartigen Mg(OC₂H₅)₂-Dispersion bei Raumtemperatur betrug nach Abstellen des Rührers ca. 60 min.

Das molare Verhältnis des Feststoffs der auf diese Weise hergestellten Feststoff-Suspension betrug: Mg:Ti:Cl ≈ 1:0,3:2,3.

### Beispiel 3 (erfindungsgemäß)

Herstellung der Katalysatorkomponente a unter Verwendung einer gelartigen Mg(OC₂H₅)₂ Dispersion, die durch Rühren einer Suspension aus gemahlenem Mg(OC₂H₅)₂ in einem inerten Kohlenwasserstoff erhalten wurde.

In einem 2 dm³ Rührgefäß mit Rückflusskühler, 2-flügeligem Blatt-Rührer und Inertgasüberlagerung (Ar) wurde eine Suspension aus 57 g eines in einer Gegenstrahlmühle des Typs 100 AFG der Fa. Hosokawa Alpine AG, Augsburg/Deutschland, mit einem Durchsatz von ca. 6 kg/h auf einen mittleren Komdurchmesser von ca. 5,4 µm gemahlenen handelsüblichen Mg(OC₂H₅)₂ in 1,0 dm³ Dieselöl mit einem Siedebereich von 100 bis 120 °C (hydrierte Benzinfraktion) bei Raumtemperatur für 20 h bei einer Rührerdrehzahl von 100 Upm gerührt.

Die Absitzzeit der dadurch erhaltenen gelartigen Mg(OC₂H₅)₂-Dispersion bei Raumtemperatur betrug nach Abstellen des Rührers ca. 20 min.

Diese Mg(OC₂H₅)₂-Dispersion wurde bei einer Rührerdrehzahl von 150 Upm auf 85 °C gebracht und während 4 h wurden 0,15 mol TiCl₄ konzentriert zudosiert. Danach wurde die entstandene Suspension 1 h auf 100 °C erhitzt. Damit war die Herstellung der Kätalysatorkomponente a abgeschlossen.

Während 2 h wurden dann bei einer Temperatur von 110 °C und einer Rührerdrehzahl von 250 Upm 0,35 mol Al₂(C₂H₅)₃Cl₃ in 200 cm³ Dieselöl (hydrierte Benzinfraktion mit Siedebereich 100 bis 120 °C) zudosiert. Anschließend wurde die Temperatur weitere 2 h bei 100 °C gehalten.

Die Feststoff-Suspension wurde auf Raumtemperatur abgekühlt. Das molare Verhältnis des Feststoffs betrug: Mg:Ti:Cl ≈ 1:0,3:2,4.

### Beispiel 4 (erfindungsgemäß)

Die Herstellung der Katalysatorkomponente a unter Verwendung einer gelartigen Mg(OC₂H₅)₂-Dispersion, die durch Rühren einer Suspension aus gemahlenem Mg(OC₂H₅)₂ in einem inerten Kohlenwasserstoff erhalten wurde, erfolgte nach dem Verfahren gemäß Beispiel 3 mit dem Unterschied, dass das auf einen mittleren Komdurchmesser von ca. 5,4 µm gemahlene handelsübliche Mg(OC₂H₅)₂ in Dieselöl mit einem Siedebereich von 100 bis 120 °C (hydrierte Benzinfraktion) bei einer Temperatur von 85 °C für 20 h bei einer Rührerdrehzahl von 100 Upm gerührt wurde.

Die Absitzzeit der gelartigen Mg(OC₂H₅)₂- Dispersion bei Raumtemperatur betrug nach Abstellen des Rührers ca. 45 min.

Das molare Verhältnis des Festsoffs der auf diese Weise hergestellten Feststoff-Suspension betrug: Mg:Ti:Cl ≈ 1:0,3:2,5.

### Vergleichsbeispiel 1

Herstellung der Katalysatorkomponente a unter Verwendung einer Suspension aus gemahlenem Mg(OC₂H₅)₂ in einem inerten Kohlenwasserstoff ohne Dispergierschritt.

In einem 2 dm³ Rührgefäß mit Rückflusskühler, 2-flügeligem Blatt-Rührer und Inertgasüberlagerung (Ar) wurden 57 g eines in einer Gegenstrahlmühle des Typs 100 AFG der Fa. Hosokawa Alpine AG, Augsburg/Deutschland, mit einem Durchsatz von ca. 6 kg/h auf einen mittleren Komdurchmesser von ca. 5,4 µm gemahlenen handelsüblichen Mg(OC₂H₅)₂ in 1,0 dm³ Dieselöl mit einem Siedebereich von 140 bis 170°C (hydrierte Benzinfraktion) bei Raumtemperatur bei einer Rührerdrehzahl von 100 Upm für 10 min aufgerührt.

Die Absitzzeit der Suspension bei Raumtemperatur betrug nach Abstellen des Rührers ca. 10 min.

Diese Suspension wurde bei einer Rührerdrehzahl von 150 Upm auf 85 °C gebracht und während 4 h wurden 0,15 mol TiCl₄ konzentriert zudosiert. Danach wurde die entstandene Suspension 1 h auf 110 °C erhitzt. Damit war die Herstellung der Katalysatorkomponente a abgeschlossen.

Während 2 h wurden bei einer Temperatur von 100 °C und einer Rührerdrehzahl von 250 Upm 0,35 mol Al₂(C₂H₅)₃Cl₃ in 200 cm³ Dieselöl (hydrierte Benzinfraktion mit Siedebereich 140 bis 170 °C) zudosiert. Anschließend wurde die Temperatur weitere 2 h bei 110°C gehalten.

Die Feststoff-Suspension wurde auf Raumtemperatur abgekühlt. Das molare Verhältnis des Feststoffs betrug: Mg:Ti:Cl ≈ 1:0,3:2,5.

### Vergleichsbeispiel 2

Herstellung der Katalysatorkomponente a unter Verwendung einer gelartigen Mg(OC₂H₅)₂-Dispersion, die durch Dispergieren einer Suspension aus handelsüblichem Mg(OC₂H₅)₂ in einem inerten Kohlenwasserstoff mit einem Hochleistungsscherwerkzeug erhalten wurde.

137 g handelsübliches Mg(OC₂H₅)₂ wurden in Dieselöl (hydrierte Benzinfraktion mit Siedebereich 140 bis 170 °C) suspendiert (Gesamtvolumen 1,0 dm³). Die Suspension wurde in einem zylindrischen Glasgefäß unter Inertgas (Ar), um Feuchtigkeit und Luft (O₂) auszuschließen, mit einem hochtourigen Dispergator (®Ultra-Turrax) unter äußerer Kühlung mit einem Eisbad in eine Dispersion überführt (Dauer ca. 8 h). Die Dispersion hatte eine gelartige Konsistenz.

0,42 dm³ (enthalten 57 g Mg(OC₂H₅)₂) der gelartigen Dispersion wurden in ein 2 dm³ Rührgefäß mit Rückflusskühler, 2-flügeligem Blatt-Rührer und Inertgasüberlagerung (Ar) überführt, mit 0,58 dm³ Dieselöl mit einem Siedebereich von 140 bis 170 °C (hydrierte Benzinfraktion) aufgefüllt und bei Raumtemperatur bei einer Rührerdrehzahl von 100 Upm für 10 min aufgerührt.

Die Absitzzeit der gelartigen Dispersion bei Raumtemperatur betrug nach Abstellen des Rührers ca. 60 min.

Diese gelartige Dispersion wurde bei einer Rührerdrehzahl von 150 Upm auf 85 °C gebracht und während 4 h wurden 0,15 mol TiCl₄ konzentriert zudosiert. Danach wurde die entstandene Suspension 1 h auf 110 °C erhitzt. Damit war die Herstellung der Katalysatorkomponente a abgeschlossen.

Während 2 h wurden bei einer Temperatur von 100 °C und einer Rührerdrehzahl von 250 Upm 0,35 mol Al₂(C₂H₅)₃Cl₃ in 200 cm³ Dieselöl (hydrierte Benzinfraktion mit Siedebereich 140 bis 170 °C) zudosiert. Anschließend wurde die Temperatur weitere 2 h bei 110 °C gehalten.

Die Feststoff-Suspension wurde auf Raumtemperatur abgekühlt. Das molare Verhältnis des Feststoffs betrug: Mg:Ti:Cl ≈ 1:0,3:2,5.

### Beispiel 5

Polymerisationsversuche mit den Katalysatoren aus den Beispielen 1 bis 4 und den beiden Vergleichsbeispielen.

Die Polymerisationsversuche wurden in einem 200 dm³ Reaktor diskontinuierlich durchgeführt. Dieser Reaktor war mit einem lmpellerrührer und Stromstörer ausgestattet. Die Temperatur im Reaktor wurde gemessen und automatisch konstant gehalten. Die Polymerisationstemperatur betrug 85 ± 1 °C.

Die Polymerisationsreaktion wurde in folgender Weise durchgeführt:

In den mit N₂ überlagerten Reaktor wurden 100 dm³ Dieselöl eingefüllt und auf 85 °C aufgeheizt. Unter Inertgasüberlagerung (N₂) wurde der Cokatalysator Al(C₂H₅)₃ (Komponente b) zugegeben, so dass im Reaktor eine Cokatalysatorkonzentration von 0,50 mmol/dm³ vorlag. Danach wurde die Katalysatorkomponente a in einer Menge, die 2,0 mmol Titan entspricht, als mit Dieselöl verdünnte Suspension in den Reaktor zugegeben.
Der Reaktor wurde mehrmals bis 8 bar mit H₂ (Wasserstoff) beaufschlagt und wieder entspannt, um den Stickstoff vollständig aus dem Reaktor zu entfernen (der Vorgang wurde durch Messung der H₂-Konzentration im Gasraum des Reaktors kontrolliert, die schließlich 95 Vol.-% anzeigte). Die Polymerisation wurde durch Öffnen des Ethyleneingangs gestartet. Über die gesamte Polymerisationszeit wurde Ethylen in einer Menge von 8,0 kg/h zugeführt, wobei der Druck im Reaktor langsam anstieg. Im Gasraum des Reaktors wurde der Gehalt an Wasserstoff ständig gemessen und der Volumenanteil konstant gehalten, indem Wasserstoff entsprechend dosiert wurde (Vol.-% H₂ = 40).

Die Polymerisation wurde nach 225 min beendet (30 kg Ethylen-Eingas) und der Gesamtdruck abgelesen. Der Reaktorinhalt wurde auf ein Filter abgelassen. Das mit Dieselöl behaftete Polymer wurde mehrere Stunden im Stickstoffstrom getrocknet. Die Ergebnisse der Polymerisation sind nachfolgend in Tabelle 1 zusammengestellt.

**Tabelle 1:**

| Polymerisationsversuche 200 dm³-Reaktor, 50 mmol Triethylaluminium, 2,0 mmol Ti (Katalysatorfeststoff), 100 dm³ Dieselöl, 8,0 kg/h Ethylen, 85 °C Polymerisationstemperatur, 225 min Polymerisationsdauer, 40 Vol.-% Wasserstoff im Gasraum | | | | | | |
|---|---|---|---|---|---|---|
| Polymerisationsversuche | | | | | | |
| Katalysatorkomponente a gemäß | Bsp. 1 | Bsp. 2 | Bsp. 3 | Bsp. 4 | Vglbsp. 1 | Vglbsp. 2 |
| Enddruck [bar] | 5,156 | 5,376 | 4,278 | 4,014 | 6,426 | 4.528 |
| Ausbeute PE [kg] | 29,7 | 29,9 | 30,0 | 30,0 | 30,0 | 30,0 |
| MFR 190/5 [dg/min] | 6,53 | 5,77 | 7,68 | 9,94 | 6,98 | 8,56 |
| Schüttdichte [g/l] | 344 | 330 | 366 | 358 | 345 | 325 |
| d₅₀ [µm] | 344 | 299 | 298 | 275 | 310 | 300 |
| S-Wert [ln(d₅₀/d₁₆)] | 0,24 | 0,34 | 0,26 | 0,31 | 0,39 | 0,39 |

Aus den Werten der Tabelle wird deutlich ersichtlich, dass nach dem erfindungsgemäßen Verfahren vorteilhafter Weise die Komgrößenverteilung des Polymerisats, ausgedrückt als sein S-Wert gemäß DIN 66 144, enger wird als im Vergleich zu den Vergleichsbeispielen. Eine möglichst enge Komgrößenverteilung ist aber sehr wichtig, um Produkte mit möglichst gleichbleibend konstanter Qualität zu erzeugen. Ferner wird ersichtlich, dass nach Vergleichsbeispiel 1, bei dem die Suspension aus gemahlenem Magnesiumalkoholat in einem inerten Kohlenwasserstoff vor der Umsetzung mit der Übergangsmetallverbindung nicht erfindungsgemäß über einen Dispergierschritt in eine gelartige Magnesiumalkoholatdispersion überführt wurde, die Katalysatoraktivität, ausgedrückt als Enddruck in bar, niedriger ist. Ein höherer Enddruck zeigt an, dass sich ein höherer Ethylenpartialdruck einstellt, um mit der gleichen Menge an Katalysator die gleiche Menge an Polymerisat unter gleichen Versuchsbedingungen zu erhalten (siehe auch: L. L. Böhm, Chem. Ing. Techn. 56 (1984) 674, Gl. (2)).

Darüber hinaus wird aus den Beispielen deutlich, dass nach Vergleichsbeispiel 2, das dem Stand der Technik gemäß EP-A-0 532 551 entspricht, zwar die Katalysatoraktivität akzeptabel ist, aber nach diesem Vergleichsbeispiel musste die gelartige Dispersion mit einem Hochleistungsdispergator unter ständiger äußerer Kühlung mit Eis hergestellt werden, was eine sehr energieintensive Herstellungsweise ist, die erfindungsgemäß vermieden werden soll.

## Patentansprüche

1. Verfahren zum Herstellen eines Poly-1-olefins durch Polymerisation eines 1-Olefins der Formel R⁴CH=CH₂, in der R⁴ Wasserstoff oder einen Alkylrest mit 1 bis 10 Kohlenstoffatomen bedeutet, in Suspension, in Lösung oder in der Gasphase, bei einer Temperatur im Bereich von 20 bis 200 °C und einem Druck im Bereich von 0,5 bis 50 bar, in Gegenwart eines Katalysators, der aus dem Umsetzungsprodukt eines Magnesiumalkoholats mit einer Übergangsmetallverbindung (Komponente a) und einer metallorganischen Verbindung (Komponente b) besteht, dessen Komponente a in der Weise hergestellt wurde, dass eine Übergangsmetallverbindung des Titans, des Zirkons, des Vanadiums oder des Chroms mit einer gelartigen Dispersion des Magnesiumalkoholats in einem inerten Kohlenwasserstoff umgesetzt wurde, **dadurch gekennzeichnet, dass** die gelartige Dispersion des Magnesiumalkoholats durch Rühren mit einem Rührorgan oder Zerscheren mit einem Hochleistungsscherwerkzeug einer Suspension aus einem nach Trockenmahlung von Magnesiumalkoholatpulver mit einer mittleren Teilchengröße, ausgedrückt als d₅₀-Wert, von größer/gleich 15 µm, vorzugsweise im Bereich von 100 bis 1000 µm, in einer inertisierten Mühle erhaltenen Magnesiumalkoholatpulvers mit einer mittleren Teilchengröße, ausgedrückt als d₅₀-Wert, von kleiner als 15 µm in einem inerten Kohlenwasserstoff, in dem die Magnesiumalkoholatteilchen nicht löslich sind, erhalten wird.

2. Verfahren nach Anspruch 1, **dadurch gekennzeichnet, dass** das Rühren mit einem Rührorgan oder Zerscheren mit einem Hochleistungsscherwerkzeug des gemahlenen Magnesiumalkoholatpulvers in einem inerten Kohlenwasserstoff bei einer Temperatur im Bereich von 10 bis 150 °C und über eine Zeitdauer im Bereich von 1 bis 24 h erfolgt.

3. Verfahren nach Anspruch 1 oder 2, **dadurch gekennzeichnet, dass** als inerter Kohlenwasserstoff ein aliphatischer oder cycloaliphatischer Kohlenwasserstoff wie Butan, Pentan, Hexan, Heptan, Isooktan, Cyclohexan, Methylcyclohexan oder ein aromatischer Kohlenwasserstoff wie Toluol, Xyiol oder hydrierte Dieselöl- oder Benzinfraktionen, die sorgfältig von Sauerstoff, Schwefelverbindungen und Feuchtigkeit befreit worden sind, eingesetzt werden.

4. Verfahren nach einem der Ansprüche 1 bis 3, **dadurch gekennzeichnet, dass** die gelartige Dispersion in einer Stufe oder in mehreren Stufen mit einer Ti-Verbindung wie TiCl₄ oder Ti(OR)₄, einer Zr-Verbindung wie ZrCl₄ oder Zr(OR)₄, einer V-Verbindung wie VCl₄ oder VOCl₃ oder einer Cr-Verbindung wie CrO₂Cl₂ umgesetzt wird.

5. Verfahren nach einem der Ansprüche 1 bis 4, **dadurch gekennzeichnet, dass** das Magnesiumalkoholat mit der Übergangsmetallverbindung bei einer Temperatur im Bereich von 20 bis 100 °C, vorzugsweise von 60 bis 90 °C, in Gegenwart eines inerten Kohlenwasserstoffs unter Rühren umgesetzt wird, wobei auf 1 mol Magnesiumalkoholat 0,05 bis 5 mol Übergangsmetallverbindung eingesetzt werden, vorzugsweise 0,1 bis 3,5 mol Übergangsmetallverbindung auf 1 mol Magnesiumalkoholat.

6. Verfahren nach Anspruch 5, **dadurch gekennzeichnet, dass** die Dauer der Umsetzung 0,5 bis 8 Stunden beträgt, vorzugsweise 2 bis 6 Stunden.

7. Verfahren nach einem der Ansprüche 1 bis 6, **dadurch gekennzeichnet, dass** als Komponente b aluminiumorganische Verbindungen der Formel R³₃Al, chlorhaltige aluminiumorganische Verbindungen, die Dialkylaluminiummonochloride der Formel R³₂AlCl oder Alkylaluminiumsesquichloride der Formel R³₃Al₂Cl₃, worin R³ ein Alkylrest mit 1 bis 16 Kohlenstoffatomen ist, wie (C₂H₅)₃Al, (C₂H₅)₂AlCl, (iC₄H₉)₂AlCl, (C₂H₅)₃Al₂Cl₃ oder Gemische dieser Verbindungen eingesetzt werden.

8. Verfahren nach einem der Ansprüche 1 bis 7, **dadurch gekennzeichnet, dass** das Mischen der Komponente a und der Komponente b vor der Polymerisation in einem Rührkessel bei einer Temperatur im Bereich von -30 bis +150 °C, vorzugsweise von -10 bis +120 °C erfolgt oder dass die beiden Komponenten direkt im Polymerisationskessel bei einer Temperatur im Bereich von 20 bis 200 °C vereinigt werden oder dass die Zugabe der Komponente b in zwei Schritten erfolgt, wobei vor der Polymerisationsreaktion die Komponente a mit einem ersten Teil einer Komponente b bei einer Temperatur im Bereich von -30 bis +150 °C voraktiviert wird und die weitere Zugabe eines weiteren Teils der gleichen oder einer anderen Komponente b in dem Polymerisationsreaktor bei einer Temperatur von 20 bis 200 °C erfolgt.

9. Verfahren nach einem der Ansprüche 1 bis 8, **dadurch gekennzeichnet, dass** der Katalysator in vorpolymerisiertem Zustand zu der Polymerisationsreaktion zugesetzt wird.

10. Verfahren nach einem der Ansprüche 1 bis 9, **dadurch gekennzeichnet, dass** es zur Polymerisation von 1-Olefinen der Formel R⁴-CH=CH₂, in der R⁴ ein Wasserstoffatom oder einen Alkylrest mit 1 bis 10 C-Atomen bedeutet, eingesetzt wird, vorzugsweise zur Polymerisation von Ethylen, Propylen, Buten-(1), Hexen-(1), 4-Methylpenten-(1) oder Okten-(1), wobei besonders bevorzugt Ethylen allein oder im Gemisch von mindestens 50 Gew.-% Ethylen und maximal 50 Gew.-% eines anderen 1 -Olefins der obigen Formel polymerisiert wird, und dass die Regelung der Molmasse des Polymerisats vorzugsweise durch Wasserstoff erfolgt.

11. Verfahren nach einem der Ansprüche 1 bis 10, **dadurch gekennzeichnet, dass** die Polymerisation in Lösung, in Suspension oder in der Gasphase, kontinuierlich oder diskontinuierlich, ein- oder mehrstufig bei einer Temperatur im Bereich von 20 bis 200 °C, vorzugsweise von 50 bis 150 °C, durchgeführt wird und dass der Druck 0,5 bis 50 bar, bevorzugt 1,5 bis 30 bar beträgt.

12. Verfahren nach einem der Ansprüche 1 bis 11, **dadurch gekennzeichnet, dass** die Komponente a oder das Umsetzungsprodukt der Komponente a mit der Komponente b in einer Konzentration, bezogen auf Übergangsmetall, von 0,0001 bis 1 mmol, vorzugsweise von 0,001 bis 0,5 mmol, Übergangsmetall pro dm³ Dispergiermittel eingesetzt wird und dass die Polymerisation in einem inerten Dispergiermittel durchgeführt wird, ausgewählt aus der Gruppe der aliphatischen oder cycloaliphatischen Kohlenwasserstoffe wie Butan, Pentan, Hexan, Heptan, isooktan, Cyclohexan, Methylcyclohexan oder Benzin- bzw. hydrierte Dieselölfraktionen, die sorgfältig von Sauerstoff, Schwefelverbindungen und Feuchtigkeit befreit worden sind.

13. Ziegler Katalysator für die Polymerisation eines 1-Olefins der Formel R⁴CH =CH₂, in der R⁴ Wasserstoff oder einen Alkylrest mit 1 bis 10 Kohlenstoffatomen bedeutet, der aus dem Umsetzungsprodukt eines Magnesiumalkoholats mit einer Übergangsmetallverbindung (Komponente a) und einer metallorganischen Verbindung (Komponente b) besteht, dessen Komponente a in der Weise hergestellt wurde, dass eine Übergangsmetallverbindung des Titans, des Zirkons, des Vanadiums oder des Chroms mit einer gelartigen Dispersion des Magnesiumalkoholats in einem inerten Kohlenwasserstoff umgesetzt wurde, **dadurch gekennzeichnet, dass** die gelartige Dispersion des Magnesiumalkoholats durch Rühren mit einem Rührorgan oder Zerscheren mit einem Hochleistungsscherwerkzeug einer Suspension aus einem nach Trockenmahlung von Magnesiumalkoholatpulver mit einer mittleren Teilchengröße, ausgedrückt als d₅₀ Wert, von größer/gleich 15 µm, vorzugsweise im Bereich von 100 bis 1000 µm, in einer inertisierten Mühle erhaltenen Magnesiumalkoholatpulvers mit einer mittleren Teilchengröße; ausgedrückt als d₅₀-Wert, von kleiner als 15 µm in einem inerten Kohlenwasserstoff, in dem die Magnesiumalkoholatteilchen nicht löslich sind, erhalten wird.

## Claims

1. A process for preparing a poly-1-olefin by polymerization of a 1-olefin of the formula R⁴CH=CH², where R⁴ is hydrogen or an alkyl radical having from 1 to 10 carbon atoms, in suspension, in solution or in the gas phase, at a temperature in the range from 20 to 200°C and a pressure in the range from 0.5 to 50 bar, in the presence of a catalyst which comprises the reaction product of a magnesium alkoxide with a transition metal compound (component a) and an organometallic compound (component b) and whose component a has been prepared by reacting a transition metal compound of titanium, of zirconium, of vanadium or of chromium with a gel-like dispersion of the magnesium alkoxide in an inert hydrocarbon, wherein the gel-like dispersion of the magnesium alkoxide is obtained from a suspension of a magnesium alkoxide powder having a mean particle size, expressed as the d₅₀ value, of less than 15 µm and obtained after dry milling of magnesium alkoxide powder having a mean particle size, expressed as the d₅₀ value, of greater than/equal to 15 µm, preferably in the range from 100 to 1000 µm, in a mill under inert conditions in an inert hydrocarbon in which the magnesium alkoxide particles are not soluble by stirring by means of a stirrer or shearing by means of a high-performance shearing tool.

2. A process according to claim 1, wherein the stirring by means of a stirrer or shearing by means of a high-performance shearing tool of the milled magnesium alkoxide powder in an inert hydrocarbon is carried out at a temperature in the range from 10 to 150°C and for a period in the range from 1 to 24 hours.

3. A process according to claim 1 or 2, wherein the inert hydrocarbon used is an aliphatic or cycloaliphatic hydrocarbon such as butane, pentane, hexane, heptane, isooctane, cyclohexane, methylcyclohexane or an aromatic hydrocarbon such as toluene, xylene or a hydrogenated diesel oil fraction or petroleum spirit fraction which have carefully been freed of oxygen, sulphur compounds and moisture.

4. A process according to any of claims 1 to 3, wherein the gel-like dispersion is reacted in one stage or in a plurality of stages with a Ti compound such as TiCl₄ or Ti(OR)₄, a Zr compound such as ZrCl₄ or Zr(OR)₄ a V compound such as VCl₄ or VOCl₃ or a Cr compound such as CrO₂Cl₂.

5. A process according to any of claims 1 to 4, wherein the magnesium alkoxide is reacted with the transition metal compound at a temperature in the range from 20 to 100°C, preferably from 60 to 90°C, in the presence of an inert hydrocarbon while stirring, with from 0.05 to 5 mol of transition metal compound being used per 1 mol of magnesium alkoxide, preferably from 0.1 to 3.5 mol of transition metal compound per 1 mol of magnesium alkoxide.

6. A process according to claim 5, wherein the reaction time is from 0.5 to 8 hours, preferably from 2 to 6 hours.

7. A process according to any of claims 1 to 6, wherein organoaluminum compounds of the formula R³₃Al, chlorine-containing organoaluminum compounds such as dialkylaluminum monochlorides of the formula R³₂AlCl or alkylaluminum sesquichlorides of the formula R³₃Al₂Cl₃, where R³ is an alkyl radical having from 1 to 16 carbon atoms, e.g. (C₂H₅)₃Al, (C₂H₅)₂AlCl, (iC₄H₉)₂AlCl, (C₂H₅)₃Al₂Cl₃, or mixtures of these compounds are used as component b.

8. A process according to any of claims 1 to 7, wherein the mixing of the component a and component b is carried out prior to the polymerization in a stirred vessel at a temperature in the range from -30 to +150°C, preferably from -10 to +120°C, or in that the two components are combined directly in the polymerization vessel at a temperature in the range from 20 to 200°C or in that the addition of the component b is carried out in two steps, with the component a being preactivated by means of a first part of a component b at a temperature in the range from -30 to +150°C prior to the polymerization reaction and the further addition of a further part of the same component b or a different component b being carried out at a temperature of from 20 to 200°C in the polymerization reactor.

9. A process according to any of claims 1 to 8, wherein the catalyst is added to the polymerization reaction in a prepolymerized state.

10. A process according to any of claims 1 to 9, wherein it is used for the polymerization of 1-olefins of the formula R⁴-CH=CH₂, where R⁴ is a hydrogen atom or an alkyl radical having from 1 to 10 carbon atoms, preferably for the polymerization of ethylene, propylene, 1-butene, 1-hexene, 4-methyl-1-pentene or 1-octene, with particular preference being given to polymerizing ethylene alone or in a mixture of at least 50% by weight of ethylene and not more than 50% by weight of another 1-olefin of the above formula, and in that the molar mass of the polymer is preferably regulated by means of hydrogen.

11. A process according to any of claims 1 to 10, wherein the polymerization is carried out in solution, in suspension or in the gas phase, continuously or batchwise, in one or more stages at a temperature in the range from 20 to 200°C, preferably from 50 to 150°C, and in that the pressure is from 0.5 to 50 bar, preferably from 1.5 to 30 bar.

12. A process according to any of claims 1 to 11, wherein the component a or the reaction product of the component a with the component b is used in a concentration, based on the transition metal, of from 0.0001 to 1 mmol, preferably from 0.001 to 0.5 mmol, of transition metal per dm³ of dispersion medium and in that the polymerization is carried out in an inert dispersion medium selected from the group consisting of aliphatic and cycloaliphatic hydrocarbons such as butane, pentane, hexane, heptane, isooctane, cyclohexane, methylcyclohexane and petroleum spirit fractions or hydrogenated diesel oil fractions which have been carefully freed of oxygen, sulphur compounds and moisture.

13. A Ziegler catalyst for the polymerization of a 1-olefin of the formula R⁴CH=CH₂, where R⁴ is hydrogen or an alkyl radical having from 1 to 10 carbon atoms, which comprises the reaction product of a magnesium alkoxide with a transition metal compound (component a) and an organometallic compound (component b) and whose component a has been prepared by reacting a transition metal compound of titanium, of zirconium, of vanadium or of chromium with a gel-like dispersion of the magnesium alkoxide in an inert hydrocarbon, wherein the gel-like dispersion of the magnesium alkoxide is obtained from a suspension of a magnesium alkoxide powder having a mean particle size, expressed as the d₅₀ value, of less than 15 µm and obtained after dry milling of magnesium alkoxide powder having a mean particle size, expressed as the d₅₀ value, of greater than/equal to 15 µm, preferably in the range from 100 to 1000 µm, in a mill under inert conditions in an inert hydrocarbon in which the magnesium alkoxide particles are not soluble by stirring by means of a stirrer or shearing by means of a high-performance shearing tool.

## Revendications

1. Procédé de préparation d'une poly-1-oléfine au moyen de la polymérisation en suspension, en solution ou en phase gazeuse d'une 1-oléfine de formule R⁴CH=CH₂, dans laquelle R⁴ représente un atome d'hydrogène ou un groupe alkyle possédant 1 à 10 atomes de carbone, à une température allant de 20°C à 200°C et sous une pression allant de 0,5 bar à 50 bars, en présence d'un catalyseur composé du produit de la réaction d'un alcoolate de magnésium avec un composé de métal de transition (composant a) et avec un composé organo-métallique (composant b), le composant a du catalyseur ayant été préparé en faisant réagir, dans un hydrocarbure inerte, un composé de métal de transition du titane, du zirconium, du vanadium ou du chrome avec une dispersion sous forme de gel de l'alcoolate de magnésium, **caractérisé en ce que** la dispersion sous forme de gel de l'alcoolate de magnésium est obtenue au moyen d'une agitation à l'aide d'un dispositif d'agitation ou au moyen d'un cisaillement à l'aide d'un dispositif de cisaillement haute performance d'une suspension d'une poudre d'alcoolate de magnésium présentant une granulométrie moyenne, exprimée en tant que valeur d₅₀, inférieure à 15 µm, dans un hydrocarbure inerte dans lequel les particules d'alcoolate de magnésium ne sont pas solubles, obtenue après un broyage à sec dans un broyeur inertisé d'une poudre d'alcoolate de magnésium présentant une granulométrie moyenne, exprimée en tant que valeur d₅₀, supérieure ou égale à 15 µm, de préférence allant de 100 µm à 1 000 µm.

2. Procédé selon la revendication 1, **caractérisé en ce que** l'on réalise l'agitation à l'aide d'un dispositif d'agitation ou le cisaillement à l'aide d'un dispositif de cisaillement haute performance de l'alcoolate de magnésium broyé dans un hydrocarbure inerte à une température allant de 10°C à 150°C et pendant une durée allant de 1 h à 24 h.

3. Procédé selon la revendication 1 ou 2, **caractérisé en ce que** l'on met en oeuvre, en tant qu'hydrocarbure inerte, un hydrocarbure aliphatique ou cycloaliphatique tel que le butane, le pentane, l'hexane, l'heptane, l'iso-octane, le cyclohexane, le méthylcyclohexane ou un hydrocarbure aromatique tel que le toluène, le xylène ou des fractions hydrogénées de gazole ou d'essence que l'on a soigneusement libérées des composés contenant de l'oxygène, du soufre, et de l'humidité.

4. Procédé selon l'une quelconque des revendications 1 à 3, **caractérisé en ce que** l'on fait réagir la dispersion sous forme de gel en une étape ou en plusieurs étapes avec un composé de Ti tel que TiCl₄ ou Ti(OR)₄, un composé de Zr tel que ZrCl₄ ou Zr(OR)₄, un composé de V tel que VCl₄ ou VOCl₃ ou un composé de Cr tel que CrO₂Cl₂.

5. Procédé selon l'une quelconque des revendications 1 à 4, **caractérisé en ce que** l'on fait réagir sous agitation l'alcoolate de magnésium avec le composé de métal de transition à une température allant de 20°C à 100°C, de préférence de 60°C à 90°C, en présence d'un hydrocarbure inerte, en mettant en oeuvre 0,05 mole à 5 moles du composé de métal de transition pour 1 mole d'alcoolate de magnésium, de préférence 0,1 mole à 3,5 moles du composé de métal de transition pour 1 mole d'alcoolate de magnésium.

6. Procédé selon la revendication 5, **caractérisé en ce que** la durée de la réaction va de 0,5 heure à 8 heures, de préférence de 2 heures à 6 heures.

7. Procédé selon l'une quelconque des revendications 1 à 6, **caractérisé en ce que** l'on met en oeuvre, en tant que composant b, des composés alumino-organiques de formule R³₃Al, des composés alumino-organiques contenant du chlore, les monochlorures de dialkylaluminium de formule R³₂AlCl ou les sesquichlorures d'alkylaluminium de formule R³₃Al₂Cl₃, dans laquelle R³ représente un groupe alkyle possédant 1 à 16 atomes de carbone, tels que (C₂H₅)₃Al, (C₂H₅)₂AlCl, (iC₄H₉)₂AlCl, (C₂H₅)₃Al₂Cl₃ ou des mélanges de ces composés:

8. Procédé selon l'une quelconque des revendications 1 à 7, **caractérisé en ce que** l'on réalise le mélange du composant a et du composant b avant la polymérisation dans un récipient sous agitation à une température allant de -30°C à +150°C, de préférence de -10°C à + 120°C ou **en ce que** l'on réunit les deux composants directement dans le récipient de polymérisation à une température allant de 20°C à 200°C ou **en ce que** l'on réalise l'addition du composant b en deux étapes en préactivant le composant a, avant la réaction de polymérisation, avec une première partie d'un composant b à une température allant de -30°C à +150°C et en réalisant l'addition supplémentaire d'une partie supplémentaire du même composant b ou d'un autre composant b dans le réacteur de polymérisation à une température allant de 20°C à 200°C.

9. Procédé selon l'une quelconque des revendications 1 à 8, **caractérisé en ce que** l'on ajoute le catalyseur dans la réaction de polymérisation à l'état de prépblymère.

10. Procédé selon l'une quelconque des revendications 1 à 9, **caractérisé en ce qu'**on le met en oeuvre pour la polymérisation des 1-oléfines de formule R⁴-CH=CH₂, dans laquelle R⁴ représente un atome d'hydrogène ou un groupe alkyle possédant 1 à 10 atomes de C, de préférence pour la polymérisation d'éthylène, de propylène, de butène-(1), d'hexène-(1), de 4-méthylpentène-(1) ou d'octène-(1), dans lequel on polymérise de manière plus particulièrement préférée l'éthylène seul ou dans un mélange d'au moins 50% en poids d'éthylène et d'au maximum 50% en poids d'une autre 1-oléfine de formule ci-dessus, et **en ce que** l'on régule la masse moléculaire du polymère de préférence avec de l'hydrogène.

11. Procédé selon l'une quelconque des revendications 1 à 10, **caractérisé en ce que** l'on réalise la polymérisation en solution, en suspension ou en phase gazeuse, en continu ou en discontinu, en une étape ou en plusieurs étapes, à une température allant de 20°C à 200°C, de préférence de 50°C à 150°C, et **en ce que** la pression va de 0,5 bar à 50 bars, de préférence de 1,5 bar à 30 bars.

12. Procédé selon l'une quelconque des revendications 1 à 11, **caractérisé en ce que** l'on met en oeuvre le composant a ou le produit de la réaction du composant a avec le composant b dans une concentration allant de 0,0001 mmole à 1 mmole, de préférence de 0,001 mmole à 0,5 mmole de métal de transition par dm³ d'agent dispersant et **en ce que** l'on réalise la polymérisation dans un dispersant inerte, choisi dans le groupe formé par les hydrocarbures aliphatiques ou cycloaliphatiques tels que le butane, le pentane, l'hexane, l'heptane, l'iso-octane, le cyclohexane, le méthylcyclohexane ou des fractions d'essence ou de gazole que l'on a soigneusement libérées des composés contenant de l'oxygène, du soufre, et de l'humidité.

13. Catalyseur de Ziegler pour la polymérisation d'une 1-oléfine de formule R⁴CH=CH₂, dans laquelle R⁴ représente un atome d'hydrogène ou un groupe alkyle possédant 1 à 10 atomes de carbone, qui est composé du produit de la réaction d'un alcoolate de magnésium avec un composé de métal de transition (composant a) et avec un composé organo-métallique (composant b), le composant a du catalyseur ayant été préparé en faisant réagir, dans un hydrocarbure inerte, un composé de métal de transition du titane, du zirconium, du vanadium ou du chrome avec une dispersion sous forme de gel de l'alcoolate de magnésium, **caractérisé en ce que** la dispersion sous forme de gel de l'alcoolate de magnésium est obtenue au moyen d'une agitation à l'aide d'un dispositif d'agitation ou au moyen d'un cisaillement à l'aide d'un dispositif de cisaillement haute performance une suspension d'une poudre d'alcoolate de magnésium présentant une granulométrie moyenne, exprimée en tant que valeur d₅₀, inférieure à 15 µm dans un hydrocarbure inerte dans lequel les particules d'alcoolate de magnésium ne sont pas solubles, obtenue après un broyage à sec dans un broyeur inertisé d'une poudre d'alcoolate de magnésium présentant une granulométrie moyenne, exprimée en tant que valeur d₅₀, supérieure ou égale à 15 µm, de préférence allant de 100 µm à 1 000 µm.
